Europäisches Patentamt

European Patent Office

Office européen des brevets

(11) Publication number: **0 438 963 A1**

# EUROPEAN PATENT APPLICATION

(21) Application number: 90500008.9

(22) Date of filing: 26.01.90

(51) Int. Cl.⁵: **F16H 1/44**

(43) Date of publication of application:
31.07.91 Bulletin 91/31

(84) Designated Contracting States:
DE FR GB IT

(71) Applicant: AUTOMOVILES UTILITARIOS, S.A.-A.U.S.A.
Ctra. de Vic, Km. 2,8
E-08240 Manresa(Barcelona)(ES)

(72) Inventor: Perramon Font, Mauricio
Ctra. Pont de Vilumara, Torre Perram n
F-08240 Manresa (Barcelona)(ES)

(74) Representative: Ponti Grau, Ignasi
Pg. de Gracia, 33
E-08007 Barcelona(ES)

(54) **An improvement in balance differential gears for vehicles.**

(57) In a differential of the kind comprising a toothed crown (1) receiving motion from a toothed wheel (2), a pair of planet gears (3,4) mounted for rotation within a box (5) integral with the crown, a pair of sun gears (6,7) meshing with the planet gears (3,4) and integral with respective shafts (8,9) transmitting the motion, and a plurality of discs (11,12) arranged in two blocks (10,10a) at both sides of the planet gears (3,4), a plurality of springs (14) are arranged about the planet gears (3,4) between the two disc blocks (10.10a) such that they act upon the two blocks and compress the discs (11,12) with one another, thus generating a friction couple which blocks the differential for resisting couples of small value.

Provides for an automatic blocking and unblocking of the differential.

FIG. 1

EP 0 438 963 A1

# BALANCE DIFFERENTIAL GEAR FOR VEHICLES

The present invention relates to a balance differential gear for vehicles, in particular for vehicles with four drive wheels, such as tractors and civil engineering or public works machines.

## BACKGROUND OF THE INVENTION

A well known kind of balance differential gears for vehicles comprises a toothed crown to receive the motion from a power transmission or prime mover, a plurality of planet pinions mounted idle within a box which is fast with the crown, and a pair of sun pinions or gears meshing with the planet pinions and secured to respective shafts making the output of the differential mechanism and transmitting the motion to the vehicle wheels or gear mechanisms for driving these wheels.

When the toothed crown rotates, the box and the planet pinions fast with it are rotated as well and transmit the motion to the sun gears which, in turn, drive the transmission shafts. When one of the transmission shafts or the user mechanisms connected to it encounters some resistance, the corresponding sun gear slows down its rotation thus increasing in a corresponding amount, through the planet pinions, the speed of the other sun gear. It is thus possible to balance the transfer of motion to both output transmission shafts of the differential gear even if the travel of the wheels or other transmission mechanisms connected to the said output shafts different.

This feature is used in the traction wheels of vehicles to compensate for the path differences of the wheels of both sides in curves. In four wheel drive vehicles, a balance differential gear is arranged in either front or rear axle, and in some cases a third, central balance differential gear is arranged also between the differential gears of the two front and rear axles in order to balance the motion differences between the said axles.

In either case, these differential gears show however the problem that if one of the output transmission shafts encounters no resistance at all (for example, when one wheel losses contact with the ground), the other shaft becomes blocked by its current resistant couple and the input motion is lost directly through the planet pinions and sun gears to the first, idling output shaft, the differential gear becoming thus unable for transmitting power.

To avoid these drawbacks, recourse has been already had to several differential blocking systems, by means of which it is possible to ensure the traction in one wheel (or output transmission shaft of the differential gear) despite of the other wheel or output shaft becoming idle, for example when one or both wheels of a front or rear axle of the vehicle leave the ground or losses the friction engagement with it.

A known blocking system consists of a plurality of discs arranged in two blocks about the sun gears, at both sides of the planet pinions and within the box which is integral with the crown, some of the discs of either block being fast to the sun gears through their inner diameters, and the remainder of the discs being fast to said box through their outer diameters. The blocking action takes place under friction between the discs.

Notwithstanding, the differential gears having such blocking systems show some drawbacks, because the differential does not work as such when it is blocked and thus the path differences between the wheels of both vehicle sides are not compensated for in the curves, and the wheel performing the longer path is subject to a slipping motion, which may cause a deflection in the vehicle travel.

## DESCRIPTION OF THE INVENTION

The balance differential gear of the present invention reaches to solve the cited drawbacks.

According to the invention, a balance differential gear for vehicles of the kind comprising:

a toothed crown to receive the motion from a power transmission or prime mover;

a plurality of planet pinions idle mounted within a box which is fast with the crown;

a pair of sun pinions or gears meshing with the planet pinions and secured to respective shafts making the output of the differential mechanism and transmitting the motion to the vehicle wheels or gear mechanisms for driving these wheels, and

a plurality of discs arranged in two blocks about the sun gears, at both sides of the planet pinions and within the box which is integral with the crown, some of the discs of either block being fast to the sun gears through their inner diameters, and the remainder of the discs being fast to the said box through their outer diameters, thus providing a blocking action under friction between the discs, comprises further a plurality of springs disposed about the planet pinions and between the two disc blocks, such that they act upon both blocks and compress together the discs of either block.

Thus, when one of the output transmission shafts of the differential gear encounters a resisting couple of a low value (smaller than the friction couple afforded by both disc packs) the differential action is suppressed thanks to the friction between the discs, and thereby a direct drawing of both transmission shafts by the crown takes place, while for resisting couples of a greater value a sliding takes place between the discs acting as a differential and effecting the transmission through the planet and sun pinions.

Owing to the arrangement of the springs between both disc blocks, the thrust is distributed in balance, thus providing a regular operation.

The differential according to the invention may be applied to either kind of vehicle, whether it has two driving wheels or four driving wheels. In particular, the differential can also be used as the central differential serving as a link between the two front and rear axles in tractors and civil engineering or public works machines.

The advantages in the use of these latter machines are noticeable: when in operation the resisting couples are high the differential behaves as such, but when one of the wheels leaves the ground and the resisting couples are small, the differential becomes blocked thus allowing traction to be performed in the other wheels.

In the travel on highway, the operation as a differential will also depend on the resisting couple.

BRIEF DESCRIPTION OF THE DRAWINGS

The enclosed drawings show a practical embodiment, only by way of not restrictive example, for a better understanding of the invention. In said drawings:

Figure 1 is a view in longitudinal section of a balance differential gear according to the invention, and

Figure 2 is a view in cross section along the line A-A of Figure 1.

DESCRIPTION OF A PREFERRED EMBODIMENT

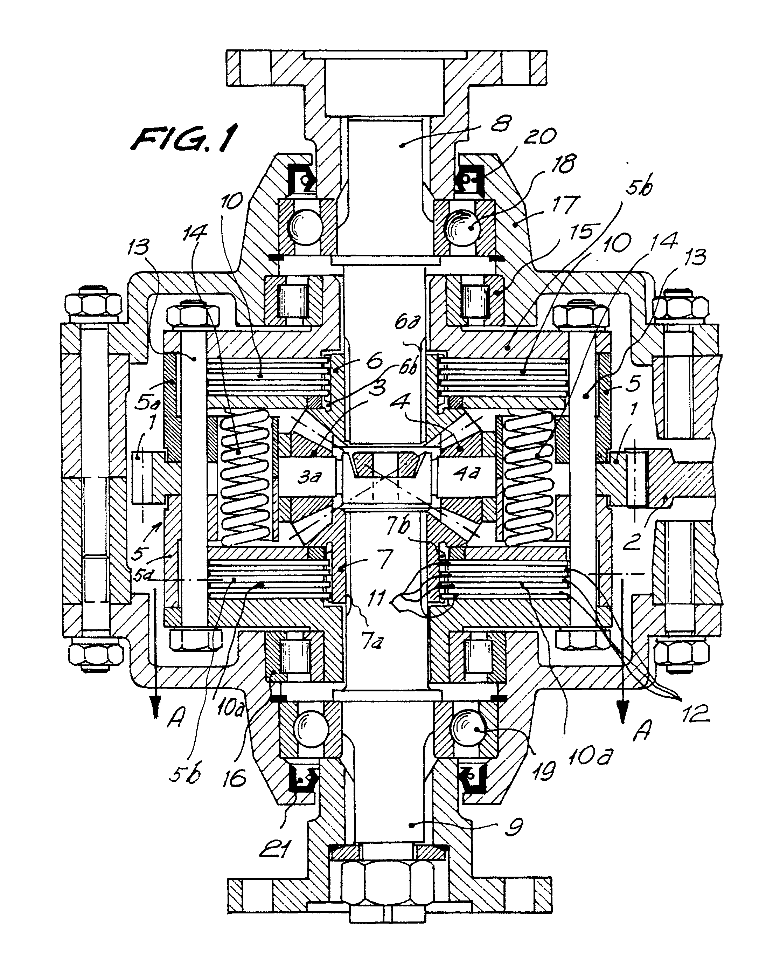

As shown in Figure 1, this embodiment of balance differential gear comprises a toothed crown 1 receiving the motion from a toothed gear 2 which is the terminal member of a suitable transmission mechanism including a suitable, not shown, prime mover. The toothed crown 1 is sandwiched between two cylindric central halves 5a which, together with respective terminal flanges 5b, form a differential box generally denoted with 5, these members being held together by means of bolts 13. The inside of the box 5 encloses four planet pinions, of which only two 3,4 are shown, idle mounted on stub shafts 3a, 4a which are fixed as regard the ensemble of the box 5 in a conventional, not further described manner. The box 5 further encloses a pair of sun pinions 6,7 meshing with the planet pinions 3,4 and made integral, by means of splines 6a, 7a, with respective output transmission shafts 8,9 which constitute the output of the differential gear and transmit the motion to the wheels of one axle (front or rear) or to the input sides of two respective differential gears of the two axles of a vehicle.

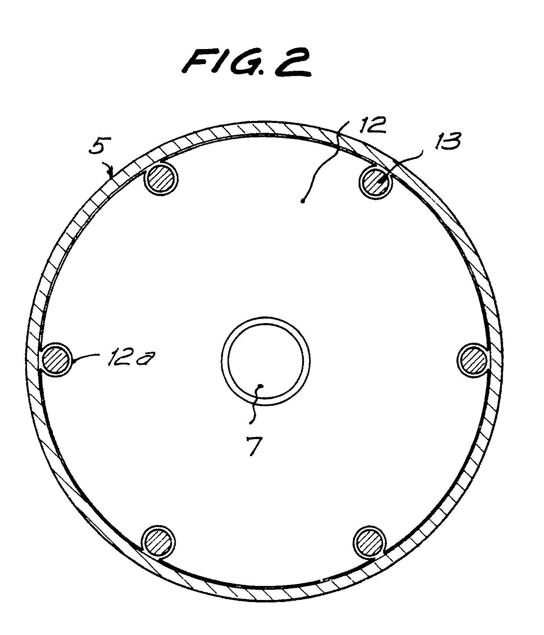

A plurality of annular discs 11,12 can also be seen arranged mutually alternated within the box 5 in two blocks or packs 10,10a about the sun wheels 6,7 at both sides of the planet pinions 3,4. The discs 11 have their inner edge toothed and engaged on splines 6b,7b formed on the sun gears 6,7 whereas the discs 12 protrude outwardly of the discs 11 and have marginal notches 12a (Fig. 2) fitted in axially sliding relation on the bolts 13, such that they are secured in rotation to the bolts and also as regards the box 5.

Figure 1 also shows a plurality of springs 14 arranged about the planet pinions 3,4 between the two disc packs 10,10a such that they act upon both packs and compress together the discs 11, fixed in rotation to the sun gears 6,7, and the discs 12 fixed in rotation with the ensemble of the box 5, thus creating a friction couple between the said box 5 and the sun gears 6,7 or the output transmission shafts 8,9 secured to these gears.

As shown in Figure 1, the ensemble of the box 5 is mounted for rotation by means of ball bearings 15,16 within a carcass 17. The shafts 8,9 are also mounted for rotation into the same carcass by means of the ball bearings 18,19.

Two packings 20,21 are arranged at both ends of the carcass 17.

The operation of the balance differential gear of the invention is as follows:

The toothed crown 1 receives the motion from the toothed gear 2 and draws with it the planet pinions 3,4 which are meshing with the sun pinions 6,7.

For resisting couples of a low value, under the friction couple provided by the discs 11,12 under the pressure of the springs 14, the discs 11 and 12 are held coupled together. The differential effect is thus suppressed and a direct pull of the shafts 8,9 by the crown 1 takes place.

For resisting couples of a greater value, over the friction couple provided by the discs 11,12 under the pressure of the springs 14, a sliding motion occurs between the discs 11 and 12. Then the balance differential gear behaves as such and the transmission takes place through the planet pinions 3,4 and the sun gears 6,7.

In this manner, blocking and unblocking of the differential gear takes place automatically according to an adjustable friction couple depending on the contacting surfaces of the discs 11,12 and the thrust exerted by the springs 14. Thus, to set a suitable couple, action can be taken either on the surface of the discs (unitary section or number of discs) or on the springs (unitary force or number of springs).

The above description corresponds to an specific embodiment of the invention, though all of the feasible variations which are accessible to the expert of the art, are believed included within the scope of the same.

## Claims

1. A balance differential gear for vehicles, of the kind comprising:

   a toothed crown (1) to receive the motion from a power transmission or prime mover;

   a plurality of planet pinions (3,4) idle mounted within a box (5) which is fast with the crown (1);

   a pair of sun pinions or gears (6,7) meshing with the planet pinions (3,4) and secured to respective shafts (8,9) making the output of the differential mechanism and transmitting the motion to the vehicle wheels or gear mechanisms for driving these wheels, and

   a plurality of discs (11,12) arranged in two blocks (10,11) about the sun gears (6,7), at both sides of the planet pinions (3,4) and within the box (5) which is integral with the crown (1), some of the discs (11) of either block being fast to the sun gears (6,7) through their inner diameters, and the remainder of the discs (12) being fast to said box (5) through their outer diameters, thus providing a blocking action under friction between the discs, the balance differential gear being characterized in that it comprises further a plurality of springs (14) disposed about the planet pinions (3,4) and between the two disc packs (10,10a), such that they act upon both packs and compress together the discs (11,12) of either pack, so that under small resisting couples the differential effect is suppressed under the friction between the discs (11,12) and a direct drive takes place of the output transmission shafts (8,9) by the toothed crown (1), whereas for resisting couples of a value which is greater, a sliding motion takes place between the discs (11,12) and the differential effect takes place to effect motion transmission through the planet pinions (3.4) and sun gears (6,7).

FIG.1

# FIG. 2

European Patent
Office

**EUROPEAN SEARCH REPORT**

Application Number

EP    90 50 0008

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3233477 (DANA CORP.)<br>* the whole document *<br>----- | 1 | F16H1/44 |
|  |  |  | **TECHNICAL FIELDS SEARCHED (Int. Cl.5)** |
|  |  |  | F16H |

The present search report has been drawn up for all claims

| Place of search | Date of completion of the search | Examiner |
|---|---|---|
| THE HAGUE | 12 SEPTEMBER 1990 | TOPP-BORN S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)